# EUROPÄISCHE PATENTSCHRIFT

(11) **EP 3 324 056 B1**
(45) Veröffentlichungstag und Bekanntmachung des Hinweises auf die Patenterteilung: **07.07.2021**
(21) Anmeldenummer: 16199304.3
(22) Anmeldetag: 17.11.2016
(51) Int. Cl.: F16B 7/18, B62D 27/06

(54) **BEFESTIGUNGSANORDNUNG IN EINEM KRAFTFAHRZEUG**
SECURING ARRANGEMENT IN A MOTOR VEHICLE
SYSTÈME DE FIXATION DANS UN VÉHICULE AUTOMOBILE

(43) Veröffentlichungstag der Anmeldung: 23.05.2018
(73) Patentinhaber: Magna Steyr Fahrzeugtechnik AG & Co KG, 8041 Graz (AT)
(72) Erfinder: GÖTZINGER, Bruno, 8045 Weinitzen (AT); TAUCHER, Jürgen, 8261 Sinabelkirchen (AT)
(74) Vertreter: Zangger, Bernd

(56) Entgegenhaltungen:
- EP-A1- 2 093 434
- WO-A1-2014/187557
- DE-A1-102004 008 290
- DE-A1-102006 044 799

## Beschreibung

### Gebiet der Erfindung

Die vorliegende Erfindung betrifft eine Befestigungsanordnung in einem Kraftfahrzeug, umfassend ein Anbindungselement, zur Befestigung einer Hochlastkomponente an einem Hohlprofil in einem Kraftfahrzeug, ein Hohlprofil und eine Hochlastkomponente.

### Stand der Technik

Es ist bekannt dass in einem Kraftfahrzeug Bauteile erforderlich sind, die hohe Lasten, wie Gewicht aber auch von außen einwirkende Kräfte, aufnehmen bzw. abführen müssen. In erster Linie betrifft dies die Karosserie des Fahrzeuges sowie allgemein alle tragenden Teile des Fahrzeuges.

Zur Herstellung einer Fahrzeugkarosserie ist es bekannt, in der sogenannten Space-Frame Bauweise, Profile einzusetzen.

Die Anbindung von solchen Profilen einer Space-Frame Karosserie aneinander, sowie auch die Anbindung weiterer krafteinleitender Bauteile an diese Space-Frame-Profile stellt hohe Anforderungen an die Qualität der Verbindung und sollte dennoch kostengünstig realisiert werden können.

Ein Verbindungselement eines tragenden Rahmens zur Verbindung von Querträgern ist beispielsweise aus der EP 1 130 275 A1 bekannt.

Die DE 10 2006 044 799 A1 offenbart ein Karosseriemodul für einen Kraftwagen, insbesondere einen Personenkraftwagen, mit einer Mehrzahl von miteinander verbundenen Flächenelementen und Trägerprofilen, deren Trägerenden in Aufnahmeöffnungen von an das Karosseriemodul angrenzenden weiteren Trägerprofilen einzustecken sind.

Die EP 2 093 434 A1 offenbart einen Knotenverbinder zum Verbinden von Hohlprofilteilen, umfassend ein zentrales Knotenelement und mindestens ein Anschlußelement, das an dem Knotenelement befestigt ist und in einen Hohlraum eines Hohlprofilteiles einschiebbar ist, wobei das Anschlußelement als U-förmiges Profil mit einer Basisfläche und zwei gegenüberliegenden Seitenwangen ausgebildet ist und auf seinem dem Knotenelement abgewandten Ende einen Einschnitt zwischen der Basisfläche und einer ersten Seitenwange aufweist, und wobei an einer zweiten Seitenwange mittels eines Gewindeelements ein Schraubenelement eingeschraubt ist, welches Schraubenetement durch eine Öffnung im Hohlprofilteil und eine Öffnung in der zweiten Seitenwange von außen schraubbar ist und so gegen die gegenüberliegende erste Seitenwange eine elastische Kraft ausübbar ist, welche das Hohlprofilteil an dem Anschlußelement fixiert.

Aus der WO 2014/187557 A1 ist ein Hohlprofil bekannt mit wenigstens einer innenliegenden Trennwand zur Bildung von Kammern, wobei zur Befestigung eines Anbauteils an dem Hohlprofil ein Einlegeteil in einer Montageposition innerhalb einer Kammer angeordnet ist und das Einlegeteil zur Herstellung einer Verbindung mit dem Anbauteil ein Verbindungsmittel aufweist, wobei das Einlegeteil als Mehrkammerprofil mit einer senkrecht zur Profilrichtung des Hohlprofils und senkrecht zur Trennwand verlaufenden Profilrichtung ausgebildet ist, wobei eine an einer äußeren Begrenzungswand des Hohlprofils anliegende Stirnfläche des Einlegeteils einen zapfenförmigen Anschlussflansch aufweist, welcher zur Fixierung des Einlegeteils in der Montageposition in eine Durchgangsöffnung der Begrenzungswand formschlüssig eingreift, und wobei das Einlegeteil in dessen Profilrichtung mit einer Länge zum Einführen des Einlegeteils in die Kammer des Hohlprofils und dessen Positionierung in der Montageposition ausgebildet ist.

Die DE 10 2004 008290 A1 offenbart schließlich ein Hohlprofilelement in der Form eines Aluminium-Strangpressteiles mit einer Vielzahl benachbarter Hohlkammern, wobei das Hohlprofilelement mit Gewindebohrungen zur Erzielung von Schraubverbindungen zu anzusetzenden Bauteilen versehen ist, wobei sich die Gewindebohrungen jeweils in Gewinde-Einsätzen aus einem gegenüber Aluminium für eine Gewindebohrung festigkeitsmäßig besser geeignetem Material befinden, wobei die Gewinde-Einsätze in Öffnungen des Hohlprofilelementes eingesetzt sind und dort mit diesem verschweißt oder verklebt sind, wobei die Öffnungen für die Gewinde-Einsätze zwischen stranggepressten Hohlkammerwänden derart vorgesehen sind, dass die diesen Öffnungen angepassten Einsätze in eingesetztem Zustand an zumindest gegenüberliegenden Hohlkammerwänden flächenschlüssig anliegen.

### Zusammenfassung der Erfindung

Es ist eine Aufgabe der Erfindung, eine Befestigungsanordnung in einem Kraftfahrzeug umfassend ein Anbindungselement, zur Befestigung einer Hochlastkomponente an einem Hohlprofil in einem Kraftfahrzeug anzugeben, das eine sichere Befestigung bei kleinem Bauraum und geringen Herstellungskosten ermöglicht.

Die Lösung der Aufgabe erfolgt durch eine Befestigungsanordnung in einem Kraftfahrzeug umfassend ein Anbindungselement, zur Befestigung einer Hochlastkomponente an einem Hohlprofil in einem Kraftfahrzeug, mit den Merkmalen gemäß Anspruch 1.

Das Anbindungselement weist einen Profilfortsatz mit einem rechteckigen Querschnitt, umfassend eine Deckfläche und eine Bodenfläche des Querschnitts des Profilfortsatzes, auf, wobei das Anbindungselement ferner eine Flanschfläche aufweist, die einen über den Querschnitt des Profilfortsatzes hinausragenden Querschnitt der Flanschfläche aufweist, wobei der Profilfortsatz und/oder die Flanschfläche eine Bohrung zur Verschraubung der Hochlastkomponente aufweist.

Erfindungsgemäß wird zur Befestigung der Hochlastkomponente, beispielsweise eines Karosseriebauteils oder auch eines Fahrwerksbauteils, an einem Hohlprofil, insbesondere einer Space-Frame-Karosserie, ein Zusatzbauteil, nämlich das Anbindungselement verwendet. Das Anbindungselement wird mittels eines rechteckigen Fortsatzes, des Profilfortsatzes, bevorzugt seitlich, in das Hohlprofil eingeschoben und kann dort an oberen und unteren Begrenzungswänden (Obergurt und Untergurt) des Hohlprofils vertikal abgestützt werden, wodurch bereits eine Sicherung gegenüber Bewegungen in vertikaler Richtung gegeben ist. Zusätzlich kann außen am Hohlprofil die Flanschfläche des Anbindungselements anliegen und kann ebenso flächig mit der Seitenwand des Hohlprofils verklebt werden.

Erfindungsgemäß ist die Bohrung zur Verschraubung der Hochlastkomponente im Profilfortsatz ausgebildet, wobei die Bohrung normal auf die Deckfläche und die Bodenfläche des Profilfortsatzes steht, wobei die Bohrung insbesondere durch Verstärkungsstege mit Außenflächen, also seitlichen Begrenzungsflächen des Profilfortsatzes verbunden ist.

Die Bohrung zur Verschraubung der Hochlastkomponente kann auch so im Profilfortsatz ausgebildet sein, dass die Bohrung normal auf die Flanschfläche steht.

Im Inneren des Profilfortsatzes können Verstärkungsstege ausgebildet sein. Der Profilfortsatz kann auch zumindest abschnittsweise aus einem Vollmaterial bestehen, insbesondere in einem Abschnitt in dem eine Bohrung zur Verschraubung der Hochlastkomponente ausgebildet ist.

Eine erfindungsgemäße Befestigungsanordnung in einem Kraftfahrzeug, umfasst ein Anbindungselement wie beschrieben, sowie ein Hohlprofil und eine Hochlastkomponente. Dabei ist erfindungsgemäß der Profilfortsatz durch eine Seitenfläche des Hohlprofils in das Hohlprofil eingeführt, so dass die Deckfläche und Bodenfläche des Profilfortsatzes innen im Hohlprofil parallel zur Deckfläche und Bodenfläche des Hohlprofils ausgerichtet sind und von der Deckfläche und Bodenfläche des Hohlprofils mittelbar vertikal abgestützt werden, wobei die Flanschfläche des Anbindungselements außen an der Seitenfläche des Hohlprofils anliegt, wobei die Hochlastkomponente an der Bohrung des Profilfortsatzes oder der Flanschfläche verschraubt ist.

Eine mittelbare Abstützung der Deckfläche und Bodenfläche des Profilfortsatzes an der Deckfläche und Bodenfläche des Hohlprofils kann insbesondere dadurch erreicht werden, dass zwischen den Deckflächen und den Bodenflächen des Profilfortsatzes und des Hohlprofils jeweils Abstützungen angeordnet sind, insbesondere vertikale Zwischenwände die von der Deckfläche bzw. Bodenfläche des Hohlprofils bis zur Deckfläche bzw. Bodenfläche des Profilfortsatzes reichen.

Erfindungsgemäß ist das Hohlprofil ein Mehrkammer-Hohlprofil, weist also innere Verbindungsstege auf, wobei der Profilfortsatz durch Öffnungen der inneren Verbindungsstege geführt ist. Der Profilfortsatz liegt dann erfindungsgemäß an den Rändern dieser Öffnungen zusätzlich auf. Die Verbindungsstege bilden dann die vertikalen Abstützungen der Deckfläche und Bodenfläche des Hohlprofils.

Im Gegensatz zur Verwendung von runden Buchsen, die üblicherweise in ein Hohlprofil eingeschweißt werden, ist bei Verwendung eines erfindungsgemäßen Anbindungselements eine Verschweißung zumindest als primäre Befestigungsart des Anbindungselements am Hohlprofil nicht erforderlich. Dadurch kann auch der Bauraum für eine Schweißnaht die aus dem Hohlprofil vorstehen würde eingespart werden. Falls das Anbindungselement dennoch zusätzlich zu einer Verklebung oder Verschraubung noch verschweißt wird, kann die Wärmezone freier positioniert werden, so dass der Querschnitt des Hohlprofils nicht geschwächt werden muss. Ebenso sind die Fügezonen am Hohlprofil durch die Verwendung des anliegenden Profilfortsatzes weniger stark belastet.

Ein solches Anbindungselement ist beispielsweise gut geeignet, um ein Fahrwerk, als Hochlastkomponente, an eine Space-Frame-Karosserie, als Hohlprofil, anzubinden.

Der "rechteckige Querschnitt" des Profilfortsatzes schließt auch die Möglichkeit eines quadratischen Querschnitts erfindungsgemäß ein.

Die "Deckfläche" und die "Bodenfläche" des Querschnitts des Profilfortsatzes müssen nicht vollständige, durch Material gebildete, geschlossene Flächen sein. Vielmehr muss lediglich eine Auflagefläche bzw. Anlagefläche gegeben sein, die zur Abstützung des Bauteils geeignet ist. Die Bodenfläche und/oder die Deckfläche können daher Öffnungen aufweisen und können auch lediglich durch Enden von seitlichen Begrenzungsflächen und/oder Stegen gebildet sein.

Eine Flanschfläche, die einen über den Querschnitt des Profilfortsatzes hinausragenden Querschnitt der Flanschfläche aufweist, muss nicht in jeder Richtung über den Querschnitt des Profilfortsatzes hinausragen, sondern kann beispielsweise nur in Richtung der Deckfläche und/oder der Bodenfläche und/oder normal auf die Deckfläche und Bodenfläche über den Profilfortsatz hinausragen, so dass eine Anlagefläche gebildet werden kann.

Die Flanschfläche steht bevorzugt normal auf den Profilfortsatz, insbesondere normal auf die Deckfläche und/oder die Bodenfläche des Profilfortsatzes. Die Flanschfläche ist bevorzugt als einfache ebene Fläche ausgebildet.

Bevorzugt sind im Inneren des Profilfortsatzes mindestens ein, bevorzugt mehrere Verstärkungsstege ausgebildet. Der Profilfortsatz kann daher eine oder mehrere Hohlkammern umfassen. Der Profilfortsatz kann beispielsweise stranggepresst oder stranggezogen sein, oder auch ein Gussbauteil sein.

Das Anbindungselement ist bevorzugt zum Verkleben und/oder zum Verschrauben mit dem Hohlprofil ausgebildet.

Die Bohrung zur Verschraubung der Hochlastkomponente kann eine Gewindebohrung sein, so dass eine Schraube in die Gewindebohrung eingeschraubt werden kann, oder ein Durchgangsloch, so dass eine Schraube mittels einer Mutter am anderen Ende des Profilfortsatzes verschraubt werden kann.

Das Anbindungselement ist bevorzugt an das Hohlprofil geklebt, insbesondere an der dem Hohlprofil zugewandten Seite der Flanschfläche und/oder an der Deckfläche und/an der Bodenfläche des Profilfortsatzes. Das Anbindungselement kann zusätzlich oder stattdessen an das Hohlprofil geschraubt und/oder genietet sein. Zusätzlich kann das Hohlprofil auch verschweißt werden. Bevorzugt ist jedoch das Anbindungselement nicht mit dem Hohlprofil verschweißt.

Vorzugsweise entspricht die Höhe der Flanschfläche der Höhe der Seitenfläche des Hohlprofils, so dass die Flanschfläche bündig mit dem Hohlprofil endet.

Die Seitenfläche des Hohlprofils, durch die der Profilfortsatz geführt ist, weist bevorzugt eine geringere Höhe auf als die Deckfläche und Bodenfläche des Hohlprofils. Die Seitenfläche ist also die gegenüber Deck- und Bodenfläche kleinere Fläche des Hohlprofils. Die Seitenfläche kann in Einbaulage bevorzugt vertikal verlaufen, Deck- und Bodenflächen somit horizontal verlaufen.

### Kurzbeschreibung der Zeichnungen

Die Erfindung wird im Folgenden beispielhaft unter Bezugnahme auf die Zeichnungen beschrieben.
- Fig. 1: ist eine Draufsicht auf ein nicht erfindungsgemäßes Anbindungselement in einem Hohlprofil in Richtung zur Flanschfläche hin.
- Fig. 2: ist eine Ansicht gemäß Schnitt A-A in Fig. 1.
- Fig. 3: ist eine Ansicht gemäß Schnitt B-B in Fig. 1.
- Fig. 4: ist eine dreidimensionale Darstellung des nicht erfindungsgemäßen Anbindungselements in einem Hohlprofil entsprechend Fig. 1.
- Fig. 5: ist eine Draufsicht auf ein erfindungsgemäßes Anbindungselement in einem Hohlprofil in einer zweiten Ausführungsform in Richtung zur Flanschfläche hin.
- Fig. 6: ist eine Ansicht gemäß Schnitt B-B in Fig. 5.
- Fig. 7: ist eine Ansicht gemäß Schnitt A-A in Fig. 5.
- Fig. 8: ist eine dreidimensionale Darstellung des erfindungsgemäßen Anbindungselements in einem Hohlprofil entsprechend Fig. 5.

### Detaillierte Beschreibung der Erfindung

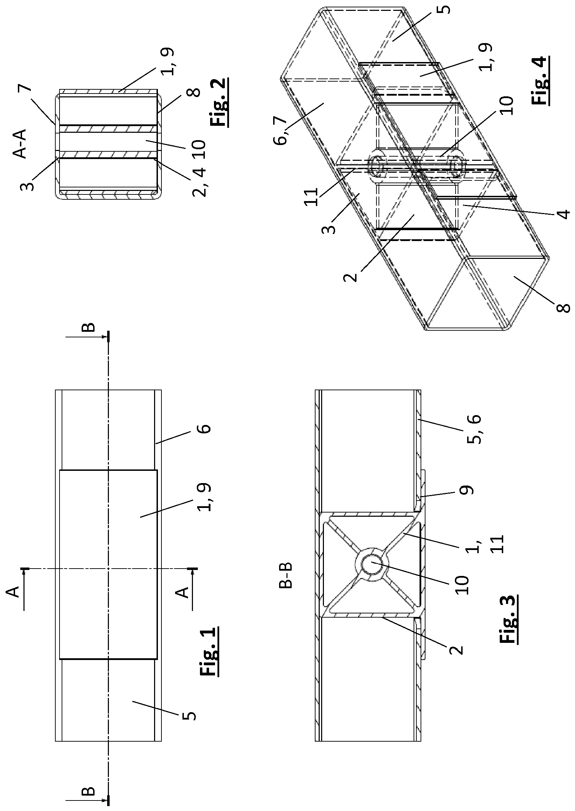

In Fig. 1 bis Fig. 4 ist ein nicht erfindungsgemäßes Anbindungselement 1, zur Befestigung einer nicht dargestellten Hochlastkomponente an einem Hohlprofil 6 dargestellt.

Das Anbindungselement 1 weist einen Profilfortsatz 2 auf, mit einem rechteckigen Querschnitt, beispielsweise einem quadratischem Querschnitt, der oben durch eine Deckfläche 3 und nach unten durch eine Bodenfläche 4 begrenzt ist. Der Profilfortsatz 2 ist durch eine Seitenfläche 5 des Hohlprofils 6 in das Hohlprofil 6 eingeführt. Die Deckfläche 3 und die Bodenfläche 4 des Profilfortsatzes 2 sind in diesem Beispiel lediglich durch die Enden von seitlichen Begrenzungsflächen und Verstärkungsstegen 11 eines Strangpressprofils gebildet, dessen Strangpressrichtung auch durch die Lage der Bohrung 10 ersichtlich ist. Diese Deckfläche 3 und die Bodenfläche 4 des Profilfortsatzes 2 liegen innen an einer vollflächigen Deckfläche 7 und Bodenfläche 8 des Hohlprofils 6 an, so dass die Deckfläche 3 und die Bodenfläche 4 des Profilfortsatzes 2 vertikal durch das Hohlprofil 6 abgestützt sind.

Das Anbindungselement 1 weist zudem eine Flanschfläche 9 auf, die einen über den Querschnitt des Profilfortsatzes 2 hinausragenden Querschnitt aufweist, also größeren Querschnitt aufweist als der Profilfortsatz 2. Der über den Querschnitt des Profilfortsatzes 2 sowie über die Öffnung in der Seitenfläche 5 des Hohlprofils 6 zumindest horizontal hinausragende Teil der Flanschfläche 9 liegt außen an der Seitenfläche 5 des Hohlprofils 6 an.

In der Ausführungsform der Fig. 1 bis Fig. 4 weist der Profilfortsatz 2 eine als Durchgangsbohrung ausgebildete Bohrung 10, zur Verschraubung einer Hochlastkomponente auf.

Diese Bohrung 10 ist mittels mehrerer Verstärkungsstege 11, insbesondere vier diagonal zu den Ecken des Profilfortsatzes 2 führenden Verstärkungsstegen 11 mit den Außenflächen des Profilfortsatzes 2 verbunden.

Das Anbindungselement 1 ist durch Verkleben an das Hohlprofil 6 gefügt.

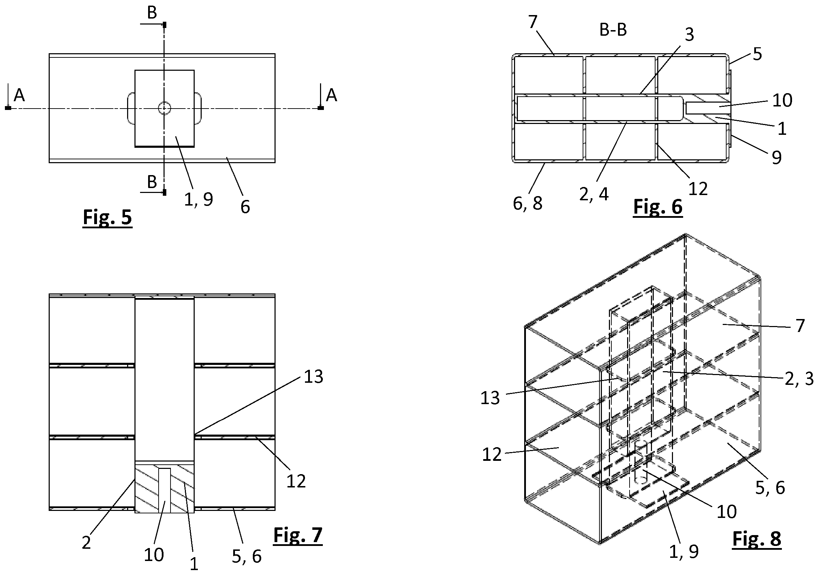

In der erfindungsgemäßen Ausführungsform die in Fig. 5 bis Fig. 8 dargestellt ist, ist das Hohlprofil 6 ein Mehrkammer-Hohlprofil, das innere Verbindungsstege 12 zwischen der Deckfläche 7 und der Bodenfläche 8 des Hohlprofils 6 aufweist. Der Profilfortsatz 2 ist durch Öffnungen 13 dieser inneren Verbindungsstege 12 geführt und kann somit an den Verbindungsstegen 12 anliegen und gegebenenfalls auch mit diesen verklebt sein. Die Verbindungsstege 12 bilden daher eine vertikale Abstützung für das Anbindungselement 1.

Die Bohrung 10 zur Verschraubung der Hochlastkomponente ist in dieser Variante durch die Flanschfläche 9 ausgebildet, nämlich in der Mitte der Flanschfläche 9 und verläuft durch einen Abschnitt des Profilfortsatzes 2. Die Bohrung 10 ist hier als Gewindebohrung, zur Aufnahme des Außengewindes einer Schraube, ausgebildet.

### Bezugszeichenliste

- 1: Anbindungselement
- 2: Profilfortsatz
- 3: Deckfläche des Profilfortsatzes
- 4: Bodenfläche des Profilfortsatzes
- 5: Seitenfläche des Hohlprofils
- 6: Hohlprofil
- 7: Deckfläche des Hohlprofils
- 8: Bodenfläche des Hohlprofils
- 9: Flanschfläche
- 10: Bohrung
- 11: Verstärkungssteg
- 12: Verbindungssteg
- 13: Öffnung im Verbindungssteg

## Patentansprüche

1. Befestigungsanordnung in einem Kraftfahrzeug, umfassend ein Anbindungselement, zur Befestigung einer Hochlastkomponente an einem Hohlprofil in einem Kraftfahrzeug, ein Hohlprofil und eine Hochlastkomponente,
wobei das Anbindungselement (1) einen Profilfortsatz (2) mit einem rechteckigen Querschnitt, umfassend eine Deckfläche (3) und eine Bodenfläche (4) des Querschnitts des Profilfortsatzes (2), aufweist, wobei das Anbindungselement (1) ferner eine Flanschfläche (9) aufweist, die einen über den Querschnitt des Profilfortsatzes (2) hinausragenden Querschnitt der Flanschfläche (9) aufweist, wobei der Profilfortsatz (2) und/oder die Flanschfläche (9) eine Bohrung (10) zur Verschraubung der Hochlastkomponente aufweist, wobei die Bohrung (10) zur Verschraubung der Hochlastkomponente im Profilfortsatz (2) ausgebildet ist, wobei die Bohrung (10) normal auf die Deckfläche (3) und die Bodenfläche (4) des Profilfortsatzes (2) steht, wobei die Bohrung (10) insbesondere durch Verstärkungsstege (11) mit Außenflächen des Profilfortsatzes (2) verbunden ist oder wobei die Bohrung (10) normal auf die Flanschfläche (9) steht, wobei der Profilfortsatz (2) durch eine Seitenfläche (5) des Hohlprofils (6) in das Hohlprofil (6) eingeführt ist, so dass die Deckfläche (3) und Bodenfläche (4) des Profilfortsatzes (2) innen im Hohlprofil (6) parallel zu einer Deckfläche (7) und Bodenfläche (8) des Hohlprofils (6) ausgerichtet sind und von der Deckfläche (7) und Bodenfläche (8) des Hohlprofils (6) mittelbar vertikal abgestützt werden, wobei die Flanschfläche (9) des Anbindungselements (1) außen an der Seitenfläche (5) des Hohlprofils (6) anliegt, wobei die Hochlastkomponente an der Bohrung (10) des Profilfortsatzes (2) oder der Flanschfläche (9) verschraubt ist, **dadurch gekennzeichnet, dass** das Hohlprofil (6) ein Mehrkammer-Hohlprofil ist, also innere Verbindungsstege (12) aufweist, wobei die Verbindungsstege (12) vertikale Abstützungen der Deckfläche (7) und Bodenfläche (8) des Hohlprofils (6) bilden, wobei der Profilfortsatz (2) durch Öffnungen (13) der inneren Verbindungsstege (12) geführt ist, wobei der Profilfortsatz (2) an den Rändern dieser Öffnungen (13) zusätzlich aufliegt.

2. Befestigungsanordnung nach Anspruch 1,
**dadurch gekennzeichnet, dass** im Inneren des Profilfortsatzes (2) mindestens ein, bevorzugt mehrere Verstärkungsstege (11) ausgebildet sind.

3. Befestigungsanordnung nach zumindest einem der vorhergehenden Ansprüche,
**dadurch gekennzeichnet, dass** das Anbindungselement (1) zum Verkleben und/oder zum Verschrauben mit dem Hohlprofil (6) ausgebildet ist.

4. Befestigungsanordnung nach zumindest einem der vorhergehenden Ansprüche,
**dadurch gekennzeichnet, dass** die Bohrung (10) zur Verschraubung der Hochlastkomponente eine Gewindebohrung ist oder ein Durchgangsloch.

5. Befestigungsanordnung nach zumindest einem der vorhergehenden Ansprüche,
**dadurch gekennzeichnet, dass** das Anbindungselement (1) an das Hohlprofil (6) geklebt ist, insbesondere an der dem Hohlprofil (6) zugewandten Seite der Flanschfläche (9) und/oder an der Deckfläche (3) und/oder an der Bodenfläche (4) des Profilfortsatzes (2).

6. Befestigungsanordnung nach zumindest einem der vorhergehenden Ansprüche,
**dadurch gekennzeichnet, dass** die Höhe der Flanschfläche (9) der Höhe der Seitenfläche (5) des Hohlprofils (6) entspricht, so dass die Flanschfläche (9) bündig mit dem Hohlprofil (6) endet.

7. Befestigungsanordnung nach zumindest einem der vorhergehenden Ansprüche,
**dadurch gekennzeichnet, dass** die Höhe der Seitenfläche (5) des Hohlprofils (6), durch die der Profilfortsatz (2) geführt ist, kleiner ist als die Breite der Deckfläche (7) und der Bodenfläche (8) des Hohlprofils (6).

## Claims

1. Securing arrangement in a motor vehicle, comprising a connecting element, for securing a heavy duty component to a hollow profile in a motor vehicle, a hollow profile and a heavy duty component,
wherein the connecting element (1) has a profile extension (2) with a rectangular cross section, comprising a top face (3) and a bottom face (4) of the cross section of the profile extension (2), wherein the connecting element (1) furthermore has a flange face (9) which comprises a cross section of the flange face (9) protruding beyond the cross section of the profile extension (2), wherein the profile extension (2) and/or the flange face (9) has a bore (10) for bolting to the heavy duty component, wherein the bore (10) for bolting to the heavy duty component is formed in the profile extension (2), wherein the bore (10) stands perpendicular to the top face (3) and the bottom face (4) of the profile extension (2), wherein the bore (10) is connected to outer faces of the profile extension (2) in particular by reinforcing webs (11) or wherein the bore (10) stands perpendicular to the flange face (9), wherein the profile extension (2) is introduced into the hollow profile (6) through a side face (5) of the hollow profile (6), so that in the inside of the hollow profile (6), the top face (3) and bottom face (4) of the profile extension (2) are oriented parallel to a top face (7) and bottom face (8) of the hollow profile (6) and are supported vertically, indirectly, by the top face (7) and bottom face (8) of the hollow profile (6), wherein the flange face (9) of the connecting element (1) lies on the outside against the side face (5) of the hollow profile (6), wherein the heavy duty component is bolted to the bore (10) of the profile extension (2) or the flange face (9), **characterized in that** the hollow profile (6) is a multi-chamber hollow profile, i.e. has inner connecting webs (12), wherein the connecting webs (12) form vertical supports of the top face (7) and bottom face (8) of the hollow profile (6), wherein the profile extension (2) is guided through openings (13) in the inner connecting webs (12), wherein the profile extension (2) additionally lies on the edges of these openings (13).

2. Securing arrangement according to Claim 1,
**characterized in that** at least one, preferably several reinforcing webs (11) are formed in the interior of the profile extension (2).

3. Securing arrangement according to at least one of the preceding claims, **characterized in that** the connecting element (1) is configured for bonding and/or bolting to the hollow profile (6).

4. Securing arrangement according to at least one of the preceding claims, **characterized in that** the bore (10) for bolting to the heavy duty component is a threaded bore or a through hole.

5. Securing arrangement according to at least one of the preceding claims, **characterized in that** the connecting element (1) is bonded to the hollow profile (6), in particular to the side of the flange face (9) facing the hollow profile (6) and/or to the top face (3) and/or to the bottom face (4) of the profile extension (2).

6. Securing arrangement according to at least one of the preceding claims, **characterized in that** the height of the flange face (9) corresponds to the height of the side face (5) of the hollow profile (6), so that the flange face (9) terminates flush with the hollow profile (6).

7. Securing arrangement according to at least one of the preceding claims, **characterized in that** the height of the side face (5) of the hollow profile (6), through which the profile extension (2) is guided, is smaller than the width of the top face (7) and of the bottom face (8) of the hollow profile (6).

## Revendications

1. Système de fixation dans un véhicule automobile, comportant un élément de connexion, pour la fixation d'un composant pour charge élevée à un profilé creux dans un véhicule automobile, un profilé creux et un composant pour charge élevée,
l'élément de connexion (1) comprenant un prolongement de profilé (2) doté d'une section transversale rectangulaire, comportant une surface supérieure (3) et une surface de base (4) de la section transversale du prolongement de profilé (2), l'élément de connexion (1) comprenant en outre une surface de bride (9) qui comprend une section transversale de la surface de bride (9) faisant saillie au-delà de la section transversale du prolongement de profilé (2), le prolongement de profilé (2) et/ou la surface de bride (9) comprenant un alésage (10) pour le vissage du composant pour charge élevée, l'alésage (10) pour le vissage du composant pour charge élevée étant réalisé dans le prolongement de profilé (2), l'alésage (10) étant normal à la surface supérieure (3) et à la surface de base (4) du prolongement de profilé (2), l'alésage (10) étant en particulier relié à des surfaces extérieures du prolongement de profilé (2) par des nervures de renforcement (11) ou l'alésage (10) étant normal à la surface de bride (9), le prolongement de profilé (2) étant introduit dans le profilé creux (6) à travers une surface latérale (5) du profilé creux (6), de sorte que la surface supérieure (3) et la surface de base (4) du prolongement de profilé (2) soient orientées intérieurement dans le profilé creux (6) parallèlement à une surface supérieure (7) et une surface de base (8) du profilé creux (6) et soient supportées verticalement indirectement par la surface supérieure (7) et la surface de base (8) du profilé creux (6), la surface de bride (9) de l'élément de connexion (1) s'appuyant à l'extérieur contre la surface latérale (5) du profilé creux (6), le composant pour charge élevée étant vissé au niveau de l'alésage (10) du prolongement de profilé (2) ou de la surface de bride (9), **caractérisé en ce que** le profilé creux (6) est un profilé creux à chambres multiples, c'est-à-dire comprend des nervures de liaison intérieures (12), les nervures de liaison (12) formant des supports verticaux de la surface supérieure (7) et de la surface de base (8) du profilé creux (6), le prolongement de profilé (2) étant guidé à travers des ouvertures (13) des nervures de liaison intérieures (12), le prolongement de profilé (2) reposant en outre sur les bords de ces ouvertures (13).

2. Système de fixation selon la revendication 1,
**caractérisé en ce qu'**au moins une, de préférence plusieurs nervures de renforcement (11) sont formées à l'intérieur du prolongement de profilé (2).

3. Système de fixation selon au moins l'une des revendications précédentes, **caractérisé en ce que** l'élément de connexion (1) est réalisé pour le collage et/ou pour le vissage sur le profilé creux (6).

4. Système de fixation selon au moins l'une des revendications précédentes, **caractérisé en ce que** l'alésage (10) pour le vissage du composant pour charge élevée est un alésage fileté ou un trou débouchant.

5. Système de fixation selon au moins l'une des revendications précédentes, **caractérisé en ce que** l'élément de connexion (1) est collé sur le profilé creux (6), en particulier sur le côté de la surface de bride (9) tourné vers le profilé creux (6) et/ou sur la surface supérieure (3) et/ou sur la surface de base (4) du prolongement de profilé (2).

6. Système de fixation selon au moins l'une des revendications précédentes, **caractérisé en ce que** la hauteur de la surface de bride (9) correspond à la hauteur de la surface latérale (5) du profilé creux (6), de sorte que la surface de bride (9) se termine en affleurement avec le profilé creux (6).

7. Système de fixation selon au moins l'une des revendications précédentes, **caractérisé en ce que** la hauteur de la surface latérale (5) du profilé creux (6), à travers laquelle le prolongement de profilé (2) est guidé, est inférieure à la largeur de la surface supérieure (7) et de la surface de base (8) du profilé creux (6).
